# EUROPEAN PATENT SPECIFICATION

(11) **EP 1 019 418 B1**
(45) Date of publication and mention of the grant of the patent: **28.04.2004**
(21) Application number: 96945376.0
(22) Date of filing: 20.12.1996
(51) Int. Cl.: C07F 9/117, C07F 9/40, A61K 31/66

(54) **INOSITOL DERIVATIVES AND PHARMACEUTICAL COMPOSITIONS COMPRISING THEM**
INOSITOLDERIVATE UND DIESE ENTHALTENDE PHARMAZEUTISCHE ZUSAMMENSETZUNGEN
DERIVES D'INOSITOL ET COMPOSITIONS PHARMACEUTIQUES LES CONTENANT

(30) Priority: 19.01.1996 SE 9600194
(43) Date of publication of application: 19.07.2000
(73) Proprietor: Bioneris AB,, 181 31 Lidingö (SE)
(72) Inventor: REHNBERG, Nicola, S-284 00 Perstorp (SE); PERSSON, Lars, S-281 37 Hässleholm (SE)
(74) Representative: Hansen, Bernd, Dr. Dipl.-Chem.
(86) International application number: PCT/SE1996/001715
(87) International publication number: WO 1997/026266

(56) References cited:
- EP-A- 0 359 256
- EP-A- 0 583 698
- EP-A- 0 583 699
- WO-A-92/19627
- WO-A-95/14477
- US-A- 4 515 722

## Description

The present invention relates to a new chemical compound preferably derived from inositol or a salt of a chemical compound derived from inositol. The compound is provided with acidic or charged groups which are complex and based on phosphorous e.g. phosphoric, phosphonic, or phosphinic acid derivatives. In addition the compound is substituted with stereochemically well defined groups. Such compounds are very difficult to bring about.

WO-A-9514477 discloses esters of inositol phosphates for the preparing of a medicament for preventing, alleviating or combating innammatory conditions in mammals including man. In this document the remaining, not phosphorylated, hydroxyl groups of inositol are esterified while the phosphorus-containing radicals are phosphate groups.

US-A-4515722 teaches analogues of phosphatidyl inositol which is one of the constituents of the inner part of the cell membrane. A glycerol residue is linked to one phosphorus-containing radical which is linked to inositol.

WO-A-9219627 also teaches analogues of phosphatidyl inositol as well as compounds not comprising inositol.

EP-A-583699 discloses analogues of myo-inositol-1,4,5-triphosphate, a compound which is known to take part of the intracellular signalling cascade. The disclosed compounds are based on deoxycyclitol i.e. not inositol and the phosphate groups are protected which means they do not carry charged groups.

EP-A-583698 discloses deoxycyclitol derivatives comprising phosphate groups or protected phosphate groups.

EP-A-359256 discloses the use of inositoltriphosphate for the preparing of a medicament for preventing, alleviating or combating tissue damage in mammals including man. This document reveals inositol derivatized with phosphate groups.

According to the present invention, it has quite unexpectedly been possible to prepare a chemical compound of formula I:

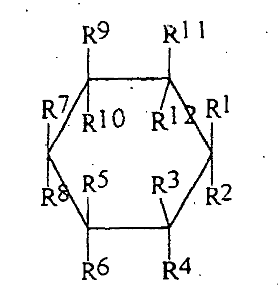

The embodiment of the invention is a chemical compound of formula 1 and wherein R¹, R³, and R⁶ have the formula: 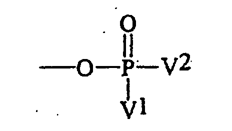 and wherein V¹ and V² are CH₂OH, COOH, CONH₂, CONOH, CH₂COOH, CH₂CONH₂, CH₂SO₃H, CH₂SO₃NH₂, CH₂NO₂, CF₂COOH, CH₂PO₃H₂. CH₂CH₂COOH, OCH₂COOH, OCH₂CONH₂, OCH₂CH₂COOH, or CH₂CH₂PO₃H₂ with the provisio that R⁶ also may be hydroxy, alkoxy, acyloxy, or N-alkyl- or N-arylcarbamoyloxy, R⁷, R¹⁰, and R¹¹ are hydroxy, alkoxy, acyloxy, or N-alkyl- or N-arytcarbamoyloxy, R², R⁴, R⁵, R⁸, R⁹, and R¹² are hydrogen and the counter ions in neutral or acidic salts are Na⁺ or K⁺ in any combination.

Thus, the chemical compound according to the invention may be an acidic or negatively charged *myo*-inositol 1,2-bis or 1,2,6-tris derivative of e.g. hydroxymethyl phosphoric acid, phosphonoformic acid, phosphonoformamide, phosphonoacetic acid, phosphonoacetamide, sulfonylmethylphosphonic acid, nitromethytphosphonic acid, carboxy-difluorophosphonic acid, phosphonomethylphosphonic acid, carboxyethylphosphonic acid, carboxymethyl phosphoric acid, carbamoylmethyl phosphoric acid, carboxyethyl phosphoric acid, or phosphonoethylphosphonic acid. The remaning inositol hydroxyls may be derivatized in the form of ethers or esters.

It is specialty preferred that R¹, R³, and R⁶ have the formula: 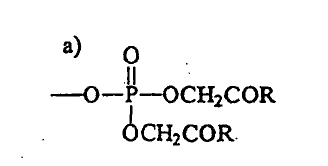 or 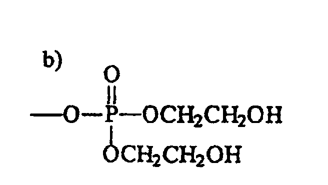 wherein
R⁶ also may be OH or CH₃CH₂COO
R is OH or NH₂,
R⁷, R¹⁰, and R¹¹ are HO or CH₃CH₂COO
R², R⁴, R⁵, R⁸, R⁹, and R¹² are hydrogen and the counter ions in neutral or acidic salts are Na⁺ or K⁺ in any combination
or wherein R¹, R³, and R⁶ have the formula: 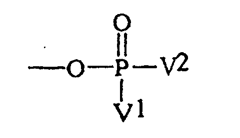 with the provisio that
wherein R⁶ also may be OH or benzyloxy
v² is benzyloxy or *p*-methoxyphenoxy
V¹ is HOCH₂, benzylOCH₂, COOH, MeOCO, benzylOCO, CH₂COOH, CHCOObenzyl, or CH₂CH₂COObenzyl
R⁷, R¹⁰, and R¹¹ are OH or benzyloxy
R², R⁴, R⁵, R⁸, R⁹, and R¹² are hydrogen and the counter ions in neutral or acidic salts is Na⁺.

Thus, the chemical compound may be an acidic or a negatively charged inositol 1,2-bis or 1,2,6-tris derivative of e.g. carboxymethyl phosphoric acid or 2-hydroxyethyl phosphoric acid. The remaining inositol hydroxyls may be derivatized in the form of propionates. The chemical compound of the invention may also be an acidic or a negatively charged inositol 1,2-bis or 1,2,6-tris derivative of e.g. hydroxymethylphosphonic acid, phosphonoformic acid, phosphonoacetic acid, or phosphonopropanoic acid.

The present invention also relates to a pharmaceutical composition comprising as a pharmaceutically active ingredient at least one compound defined above. The pharmaceutical composition can consist of a compound of formula 1 solely or together with an additive, excipient or carrier. It is suitable that the composition exists in unit dosage forms. The administration form could be parenteral such as subcutaneous, intramuscular, or intravenous or non-parenteral such as tablets, granules. or capsules. For administration to human patients appropriate dosages can routinely be determined by those, skilled in the art by extension of results obtained in animals. The preferred dosage for humans falls within the range of 0.1 to 25 mg compound/day/kg body weight. The composition usually contains 0.01-1.5 g, such as 0.05-1.3 g, or preferably, 0.1-1.0 g compound of formula 1. The compound of formula 1 may be the only pharmaceutically active ingredient in the composition. However, also other pharmaceutically active ingredients can be present therein. The amount of the compound of formula 1 should then constitute 5-95 % or 15-80 % such as 25-60 % by weight of said active ingredients.

The invention is further illustrated in connection with the embodiment examples below of which examples 1-23 show production of various compounds within the scope of the invention. Example 24 illustrates the pharmacutical effect of a compound according to the invention and example 25 shows a toxicological test of a compound according to the invention.

### Example 1

A stock solution (0.5 M) of 1D-*myo*-inositol-1,2,6-tris(dihydrogenphosphate) *N*-ethyldiisopropylamine was prepared from 1D-*myo*-inositol-1,2,6-tris(calcium-phosphate) (300 g, water content 10%, 0.51 mol) by ion exchange (Dowex® 50 W X 8, H⁺), followed by neutralization with *N*-ethyldiisopropylamine (196 g, 1.52 mol) and adjusting to a final volume of 11. Dissolution of the amine was facilitated by the addition of 1-propanol which gave a one-phase system. Removal of solvent gave a salt analyzing for 2.3 ≤ N/inositol ≤ 3.3. [α]_{D}²² -13.15° (c 0.2, aqueous buffer pH 7), ¹H-NMR (D₂O) inositol signals δ 4.74 (d, 1 H, J = 8 9 Hz, H-2), 4.36 (q, 1 H, J = 9.2 Hz, H-6), 4.19 (t, 1 H, J = 9.7 Hz, H-1), 3.76 (H-4, 1 H. obscured by CHN), 3.63 (d, 1 H, J = 10.3 Hz, H-3), 3.52 (t, 1 H, J = 9.52 Hz, H-5), ammonium signals δ 3.73 (hept, 2 H, J = 6.6 Hz, CHN), 3.21 (q, 2 H, J = 7.5 Hz, CH₂N), 1.35 (m, 15 H, CH₃)

The solvent from a sample of the *N*-ethyldiisopropylammonium salt stock solution (50 ml, 25 mmol) was removed and residual propanol and water were removed by co-evaporation with dry dichloromethane. The residue was dissolved in dry dichloromethane (300 ml) and DMAP (100 mmol, 4 equiv) was added (an immediate precipitate is formed) followed by the propanoic acid anhydride (250 mmol, 10 equiv). The mixture usually became homogeneous within a few minutes A large excess of methanol was added after 2 d. After a few hours the solvent was removed and the residue was dissolved in methanol (30 ml) and added dropwise with stirring to dry diethyl ether (1.8.l). The semisolid precipitate was dissolved in a small volume of water (30 ml) and passed through a column of Dowex® (50 W X 8, Na⁺, 100 equiv) with water as eluent (2.5 l) The water was removed at reduced pressure (foaming may be suppressed by addition of 2-propanol) and the residue, dissolved in a small volume of water (15 ml), was added with stirring into ethanol (200 ml). The precipitate was collected (centrifugation prior to decantation may be expedient) and dried to give 1D-3,4,5-tri-*O*-propanoyl-*myo*-inositol 1,2,6-tris(dihydrogenphosphate) sodium salt: [α]_{D}²³ +6.3° (*c* 0.7, aqueous buffer pH 7); ¹H-NMR (D₂O) δ 5.29 (t, 1 H, J = 10.0 Hz, H-4), 5.07 (t, 1 H, J = 9.5 Hz, H-5), 4.99 (ddd, 1H, J = 10.4, 2.6, 1.1 Hz, H-3), 4.68 (dt, 1 H, J = 10.0, 2.6 Hz, H-2), 4.40 (q, 1 H, J = 9.3, H-6), 4.14 (tt, 1 H, J = 9.4, 2.8 Hz, H-1) 2.35-2.10 (m, 6 H, CH₂), 0.90-0.80 (m, 9 H, CH₃); ¹³C-NMR (D₂O) δ 179.6, 179.5, 179.1, 77.1 (t, J = 5.8 Hz), 76.1 (d, J = 5.6 Hz) 75.9 (m), 74.9 (d, J = 2.2 Hz), 73.4 , 72.9 (d, J = 2.4 Hz), 30.3, 30.2, 30.1, 11.3, 11.2, 11.0; ³¹P-NMR (D₂O) δ 0 (set as zero), -1.1, -1.2.

### Example 2

A solution of the 1D-3,4,5-tri-*O*-propanoyl-*myo*-inositol-1,2,6-tris(dihydrogenphosphate) obtained in Example 1 (ca. 10 mmol in 50 ml water) was passed through a column of Dowex® (50 W x 8, H⁺, 60 eq) with water/methanol (3:2) as eluent and immediately treated with silver carbonate (70 mmol). The slurry was stirred for I h, solvent was removed, residuary water and methanol were removed by repeated co-evaporations with dry acetonitrile, and the residue dried in vacuo. The silver salt was suspended in dry acetonitrile (250 ml) and benzyl bromoacetate (140 mmol) was added. The mixture was refluxed for 20 h in the dark and the solution was decanted off. Acetonitrile was evaporated and the crude product was chromatographed on silica with heptane/ethyl acetate (1:1) as eluent to give 1D-3,4,5-tri-*O*-propanoyl-*myo*-inositol-1,2,6-tris[bis-(benzyloxycarbonylmethyl) phosphate] (50 %). ¹H-NMR (CDCl₃) δ 7.40-7.15 (m, PhH, 30 H), 5.43 (t, 1 H, J = 10.2 Hz, H-4), 5.31 (dt, 1 H, J = 8.9 Hz, 2.7 Hz, H-3), 5.23-5.10 (m, 12 H, H-2, H-5, PhCH₂), 4.70 (q, I H, J = 9.8 Hz, H-6), 4.70-4.54 (m, 13 H, POCH₂, H-1), 2.45-2.15 (m, 6 H, CH₃*CH*₂), 1.10-0.95, (m, 9 H, *CH*₃CH₂).

### Example 3

1D-3,4,5-Tri-*O*-propanoyl-*myo*-inositol 1,2,6-trisphosphate (1 mmol) was passed through a column packed with an acidic ion exchange resin. The eluate was treated with silver carbonate (6 equiv). After drying by coevaporation with acetonitrile water was removed. The dry residue was suspended in acetonitrile (100 ml). 2-Benzyloxyethyl iodide (14 equiv) was added and the mixture was refluxed for 20 h. Chromatography (heptane/ethyl acetate) gave 1D-3,4,5-tri-*O*-propanoyl-*myo*-inositol-1,2,6-tris[bis(2-benzyloxyethyl)-phosphate] (0.73 g); ¹H-NMR (CDCl₃) δ 7.45-7.15 (m, 30 H), 5.47 (d, 1 H, J = 10.1 Hz, H-4), 5.21 (dt, 1 H, J = 8.7, 2.2 Hz, H-3), 5.05 (t, 1 H, J = 10.1 Hz, H-5), 4.89 (q, 1 H, J = 9.5 Hz, H-6), 4.82 (d, J = 9.0 Hz, H-2). 4 60-4.40 (m, 13 H, PhCH₂, H-1), 4.35-4.08 (m, 12 H, POCH₂), 3.72-3.50 (m, 12 H, CH₂Obenzyl), 2.50-2.16 (m, 12 H, CH₃*CH*₂, 1.15-0.95 (in, 9 H, *CH*₃CH₂).

### Example 4

1D-3,4,5-Tri-*O*-propanoyl-*myo*-inositol-1,2,6-tris[bis(benzyloxycarbanylmethyl)phosphate] (1.5 mmol) and sodium iodide (5.5 mmol) was dissolved in refluxing acetone (21 ml). After 17 h the reaction mixture was allowed to cool and the solvent was removed. The residue was chromatographed on silica with acetonitrile/methanol (1:1) as eluent to give 1D-3,4,5-tri-*O*-propanoyl-*myo*-inositol-1,2,6-tris(benzyloxycarbonylmethyl sodium phosphate) (1.17 g, 70 %) ¹H-NMR (CD₃COOD) δ 7-50-7.20 (m, 15 H, PhH), 5.45 (t, 1 H, J = 10.0 Hz, H-4), 5.40-5.10, 4.90-4.50 (m, 17 H, POCH₂, PhCH₂, H-1, H-2, H-3, H-5, H-6), 2.25-2 09 (m, 6 H, CH₃*CH*₂), 1.1-0.95 (m, 9 H, *CH*₃CH₂).

### Example 5

1D-3,4,5-Tri-*O*-propanoyl-*myo*-inositol-1,2,6-tris[bis(2-benzyloxyethyl)phosphate] (0.855 mmol) was dissolved in acetone (15 ml) and sodium iodide (7.5 ml, 0.5 M, acetone) was added. The solution was refluxed for 4 h. Solvent was removed and the residue was chromatographed (CH₃CN/MeOH 1:1) to give 1D-3,4,5-tri-*O*-propanoyl-*myo*-inositol 1,2,6-tris(benzyloxyethyl sodium phosphate) (0.82 g); ¹H-NMR (CD₃COOD) δ 7.46-7.21 (m, 15 H), 5.56 (t, 1 H, J = 10:0 Hz, H-4), 5.32 (t, 1 H, J = 10.0 Hz, H-5), 5.20 (d, 1H, J = 10.7 Hz, H-3), 4.79 (q, 1 H, J = 9.2 Hz, H-6), 4.70-4.44 (m, 8 H, PhCH₂, H-1, H-2), 4.35-4.0 (m, 6 H, POCH₂), 3.80-3.6 (m, 6 H. benzylOCH₂), 2.50-2.20 (m, 6 H, CH₃*CH*₂), 1.12-1.00 (m, 9 H, *CH*₃CH₂).

### Example 6

1D-3,4,5-Tri-*O*-propanoyl-*myo*-inositol-1,2,6-tris(benzyloxycarbonyl methyl sodium phosphate) (3.74 g) was dissolved in acetic acid (50 ml) and hydrogenated (1 atm, 20°C) over Pd(C) (0.5 g, 5 %). The reaction was complete within 20 h. The solvent was removed and the residue was dissolved in water (10 ml) and added droppwise to ethanol (350 ml). The precipitate was filtered off, washed with ethanol and dried to give 1D-3,4,5-tri-*O*-propanoyl-*myo*-inositol-1,2,6-tris(carboxy methyl hydrogen) phosphate sodium salt (85 %); ¹H-NMR (D₂O) δ 5.29 (t, 1H, *J =* 9.9 Hz, H-4), 5.10 (t, 1H, *J =* 9.4 Hz, H-5), 5.01 (d, 1 H, 10.3 Hz, H-3), 4.79 (d, 1 H, *J* = 9.3 Hz, H-2), 4.50 (q, 1 H, *J* = 9.5 Hz, H-6), 4.40-3.90 (m, 7 H, H-1, OCH₂), 2.35-2.10 (m, 6 H, CH₂CO), 0.90-0.80 (m, 9 H, CH₃); ¹³C-NMR (D₂O) δ 179.5, 179.2, 178.9, 174.5 (m), 176.0 (m), 76.9 (t, C-6), 76.7 (d, C-2), 75.5 (m, C-1), 74.9 (s, C-5). 73.5 (s, C-4), 72.7 (s, C-3), 65.6 (m), 30.3, 30.2, 30.1, 11.2, 11.0; ³¹P-NMR (D₂O) δ 0 (set as zero, 2P), -0.4 (1P), IR (KBr) 1750 cm⁻¹; [α]_{D}²³ +15.4° (c 0.6, aqueous buffer pH 7.0)

### Example 8

1D-3,4,5-Tri-*O*-propionyl-*myo*-inositol-1,2,6-tris(carboxymethyl hydrogen phosphate) sodium salt (0.4 g) was dissolved in methanol (10 ml) saturated with ammonia. After 1 d a gel was formed. After 4 d methanol was removed and the residue dissolved in water (2 ml) and added dropwise to ethanol (35 ml). The precipitate was collected to give 1D-*myo*-inositol-1,2,6-tris(carboxymethyl hydrogen phosphate) sodium salt (0.26 g, 108%); ¹H-NMR (D₂O, 40°C) δ 4.81 (d, 1 H, *J* = 8.2 Hz, H-2), 4.50-4.16 (m, 7 H, H-6, CH₂CO), 4.12 (t, *J* = 9.2, H-1), 3.72 (t, 1 H, *J* = 9.7 Hz, H-4), 3.57 (dd, 1 H, *J* = 9.4, 2.0 Hz, H-3), 3.51 (t, 1 H, J = 9.1 Hz, H-5); ¹³C-NMR (D₂O) δ 179.8 (m), 80.0 (d), 79.7 (t), 76.6 (s), 75.9 (m), 75.3 (s), 73.5 (s), 67.2 (m); ³¹P-NMR (D₂O) one broad signal; IR (KBr) 1690 cm⁻¹.

### Example 9

1D-*myo*-inositol-1,2,6-tris(carbamoylmethyl hydrogen phosphate) sodium salt was prepared from 1D-3,4,5-tri-*O*-propanoyl-*myo*-inositol-1,2,6-tris(benzyloxycarbonylmethyl sodium phosphate) (1.01 g) by aminolysis in ammonia(*l*) (6ml) in a sealed steel container for 3 d at 20°C. After evaporation of ammonia the oily residue was suspended in acetonitrile (30 ml). The formed solid was collected and dried to give 1D-*myo*-inositol 1,2,6-tris(carbamoylmethyl hydrogen phosphate) sodium salt (0.58 g, 88%); ¹H-NMR (D₂O) δ 4.63 (d, 1 H, H-2), 4.30 - 4.10 (m, 6 H, OCH₂), 4.19 (q, 1 H, J = 8.2 Hz, H-6), 3.99 (tt, 1 H, J = 9.9, 2.2 Hz, H-1), 3.55 (t, 1 H, J = 9.4 Hz, H-4), 3.44 (d, 1H, J = 9.0 Hz, H-3), 3.34 (t, 1 H, J = 9.0 Hz, H -5); ³¹P-NMR (D₂O) δ 0 (by default), -0.50, -0.96.

### Example 10

±-3,4,5-Tri-*O*-benzyl-*myo*-inositol (450 mg) and tetrazol (420 mg) were dissolved in dichloromethane (2 ml). Dibenzyl N,N-diethylphosphoroamidite (1.5 g) was added and the mixture was stirred for 1 h at room temperature. The solvent was removed and the residue chromatographed (hexane/diethyl ether 5:1) to give ±-3,4,5-tri-*O*-benzyl--*myo*-inositol-1,2,6-tris(dibenzyl phosphite) (1200 mg). ³¹P-NMR (C₆D₆) δ 140.2 (d, ⁵Jpp = 2.1 Hz, P-2), 140.8 (dd, ⁵J1pp = 2.1 Hz, ⁵J2pp = 3.9 Hz, P-1), 143.2 (d, ⁵Jpp = 3.9 Hz, P-6).

### Example 11

The trisphosphite obtained in Example 10 and benzyl bromoacetate were heated at 80 C for 2h. After cooling the reaction mixture was chromatographed (CHCl₃). Fractions containing product were pooled and rechromatographed (CHCl₃/CH₂Cl₂/acetone 15:15:1) to give ±-3,4,5-tri-*O*-benzyl-*myo*-inositol-1,2,6-tris(benzylbenzyloxycarbonylmethyl phosphonate) (750 mg); ³¹P-NMR (C₆D₆) δ 21.0 - 22.5 (m), 24.0 24.3, 24.4.

### Example 12

The product obtained according to Example 11 was dissolved in methanol (5 ml), treated with Pd(C) (10%, 150 mg), and stirred for 12 h under hydrogen at room temperature. The catalyst was filtered of, the filtrate was evaporated and the residue was dissolved in methanol (2 ml). Into this solution was aqueous sodium hydroxide added (1 M, 6 equiv). The solvent was removed until the residue had the consistency of a dens oil. Addition of methanol (10 ml) gave a precipitate that was reprecipitated and dried to give ±-*myo*-inositol-1,2,6-tris(hydrogen carboxymethylphosphonate) sodium salt (325 mg); ¹³C-NMR (D₂O) δ 39.78 (m), 42.14 (m, J_{P-C} ≈ 19 Hz), 73.15, 74.4, 75.68, 78.57, 78.46, 78.90, 178.4 - 178.7 (m); ³¹P-NMR (D₂O) δ 18.8, 19.37, 20.70.

### Example 13

±-3,4,5-Tri-*O*-benzyl-*myo*-inositol 1,2,6-tris(dibenzyl phosphite) (0.473 g), benzyl chloromethyl ether (2 ml), and sodium hydride (100 mg) was stirred for 20 h at 60°C. Chromatography (hexane/ethyl acetate 1:1) gave ±-3,4,5-tri-*O*-benzyl-*myo*-inositol-1,2,6-tris(benzyl benzyloxymetltylphosphonate) (0.38 g); ³¹P-NMR (CDCl₃) δ 23.94 -22.40 (m).

### Example 14

The trisphosphonate obtained according to Example 13 (0.38 g) was dissolved in methanol(10 ml) and hydrogenated over Pd(C) (10%, 150 mg). After 16 h the catalyst was filtered of and the solvent removed. The residue was dissolved in methanol/water (30/1) and treated with sodium hydride (0.022 g). Removal of solvent gave gave±-3,4,5-tri-*O*-benzyl-*myo*-inositol 1,2,6-tris(hydrogen hydroxymethylphosphonate) sodium salt (110 mg); ³¹P-NMR (D₂O) δ 21.87, 21.67, 20.78.

### Example 15

To a solution of ±-3,4,5,6-tetra-O-benzyl-*myo*-inositol (432 mg) and tetrazole (245 mg) in dichloromethane (3 ml) was added benzyl *p*-methoxyphenyl N,N-diisopropyl-phosphoroamidite (1010 mg). The reaction mixture was stirred for 1 h at room temperature. Chromatography (benzene) gave ±-3,4,5,6-tetra-*O*-benzyl-*myo*-inositol--1,2-bis(benzyl p-methoxyphenyl phosphite) (670 mg); ³¹P-NMR (C₆D₆) δ 136.54, 135.40, 134.91, 131.16, 129.73, 124.19.

### Example 16

±-3,4,5,6-Tetra-*O*-benzyl-*myo*-inositol-1,2-bis(benzyl p-methoxyphenyl phosphonate) (670 mg) was treated with benzyl chloroformate (0.5 ml) at. 50°C for 16 h. Hexane was added and the precipitate was collected and washed with hexane to give ±-3,4,5,6-tetra-*O*-benzyl-*myo*-inositol-1,2-bis(benzyl benzyloxy carbonyl)phosphate; ³¹P--NMR (CDCl₃) δ -2.70, -2.87, -3.68, -4.57, -7.31, -7.51, -8.81, -11.71.

### Example 17

The product obtained according to Example 16 was dissolved in acetonitrile (4 ml) and aqueous sodium hydrogen carbonate (1 ml. JM). After 1 h the solvent was removed and the residue was chromatographed (CHCl₃/CHOH 20:1) to give ±3,4,5,6 tetra-*O*--*myo*-inositol-1,2-bis(hydrogen benzyloxy carbonylphosphonate) sodium salt (150 mg); ³¹P-NMR (CDCl₃/CD₃OD) δ -7.21, -7.81.

### Example 18

±-3,4,5,6-Tetra-*O*-benzyl-*myo*-inositol (540 mg) and tetrazole (350 mg) was dissolved in dry dichloromethane (2ml) and dibenzyl *N*,*N*-diethylphosphoroamidite (1 g) was added. The mixture was stirred for 1 h at room temperature and the solvent was removed. The residue was chromatographed (hexane/diethyl ether 8:1) to give ±-3,4,5,6-tetra-*O*-benzyl-*myo*-inositol-1,2-bis(dibenzyl phosphite) (72 % yield); ³¹P-NMR (C₆H₆) δ 140.5 (d, J = 1.8 Hz), 140.6 (d, J = 1.8 Hz).

### Example 19

±-3,4,5,6-Tetra-*O*-benzyl-*myo*-inositol-1,2-bis(dibenzyl phosphite (600 mg) was treated with benzyl bromoacetate (3 ml) at 80°C. After 1 h the mixture was chromatographed (CH₂Cl₂/acetone 40/1) to give ±3,4,5,6-tetra-*O*-benzyl-*myo*-inositol-1,2-bis(benzyl benzyloxycarbonylmethylphosphonate) (450 mg); ³¹P-NMR (C₆D₆) δ 20.8 - 22.6 (m).

### Example 20

±-3,4,5,6-Tetra-*O*-benzyl-*myo*-inositol-1,2-bis(benzyl benzyloxy carbonyl phosphonate) (420 mg) was dissolved in methanol (5 ml) and hydrogenated at room temperature over Pd(C) (100 mg, 10%). After removal of solvent and catalyst the residue was dissolved in water (2 ml) and neutralized with sodium hydroxide (1 M). Solvent was removed and the residue was dissolved in a small volume of water and poured into methanol. The precipitate was collected to give ±-*myo*-inositol-1,2-bis(hydrogencarboxymethyl phosphonate) sodium salt (160 mg); ¹H-NMR ( D₂O) δ 4.67 (dt, 1 H, H-2), 4.01 (1 H, H-1), 3.89 (t, 1 H, H-6), 3.75 (t, 1 H, H-4), 3.50 (ddd, 1 H, H-3), 3.33 (t, 1 H, H-5), 2.88-2.62 (m, 4 H, P-CH₂), J_{1,2} = J_{2,3} = 2.5 Hz, J_{1,6} = J_{5,6} = J_{5,4} = J_{4,3} = 9.5 Hz, ³J_{P-CH2} = 9.3 Hz, ⁴J_{POC}⁴_{H}⁴ = 1 Hz, ²J_{P-O-H}¹ = 9.5 Hz, ²J_{P-C-H} = 21.6 Hz, ²J_{P-C-H} = 19.2 Hz; ¹³C-NMR (D₂O) δ 178.4 (t, ²J_{P-C} = 5.2 Hz), 79.2 (d, ²J_{P-C} = 7.0 Hz), 76.8 (d, J?), 76.2 (s), 74.8 (s), 73.5 (d, J_{P-C} = 5.2), 73.2 (s), 51.0 (CH₃OH), 41.8 (d, ¹J_{P-C} = 43.6 Hz), 39.4 (d, ¹J_{P-C} = 42.0), ³¹P-NMR (D₂O) δ 19.71, 19.04.

### Example 21

±-3,4,5,6-Tetra-*O*-benzyl-*myo*-inositol-1,2-bis(dibenzylphosphite) (0.4 g), benzyl chloromethyl ether (2 ml), and sodium hydride (100 mg) was stirred for 15 h at 60°C. The precipitate was removed and the liquid was chromatographed (hexane/ ethyl acetate 10:1) to give ±-3,4,5,6-tetra-*O*-benzyl-*myo*-inositol-1,2-bis(benzyl benzyloxy methyl phosphonate) (0.33 g); ³¹P-NMR (CDCl₃) 22.8-23.8 (m)

### Example 22

±-3,4,5,6-Tetra-*O*-benzyl-*myo*-inositol-1,2-bis(benzylbenzyloxymethylphosphonate) (0.33 g) was dissolved in methanol and hydrogenated over Pd(C) (120 mg, 10%). After 16 h the catalyst and solvent were removed. The residue was dissolved i methanol (3 ml) and treated with water (0.1 ml) and sodium hydride (14 mg). The precipitate was filtered and washed with methanol and dried to give ±-*myo*-inositol 1,2-bis(hydrogen hydroxymethylphosphonate) sodium salt (100 mg); ³¹P-NMR (D₂O) δ 21.24, 20.58.

### Example 23

The method disclosed below follows that described by Winter et al (C.A. Winter, G.A. Risley, and · G. W. Nuss, *Proc. Soc. Exp. Biol. Med*., 1962, 111, 544) and is used to evaluate the antiinflammatory effects of drugs. Mice were injected with carrageenan solution into the lower surface of both hind-paws (0.75 mg per paw, in 0.05 ml); an increase in paw weght indicates inflammation (edema). 3.5 hours later, the animals were sacrificed by a blow to the cervical vertebrae and the hind-paws sectioned and weighed. 10 mice were studied per group. The test was performed blind.

±-*myo*-inositol-1,2,6-tris(hydrogen carboxymethylphosphonate) sodium salt was examined at the dose of 64 mg/kg, administered i.v., 5 minutes before carrageenan (i.e. 3 h 35 min before paw section).
Result: ±*myo*-inositol-1,2,6-tris(hydrogen carboxymethylphosphonate) sodium salt significantly reduced the elevated hind-paw weight induced by intraplantar injection of carrageenan; paw weight was decreased by 32% after this treatment.

### Example 24

The method disclosed below follows that described by Irwin (S. Irwin, *Psychopharmacologica*, 1968, 13, 222) and is used to detect general physiological, behavorial and toxic effects of drugs, and indicates the range of doses that can be used for later experiments.

Mice (3 per dose) were administered ±-*myo*-inositol-1,2,6-tris(hydrogen carboxymethylphosphonate) sodium salt and were observed in comparison with a control group given vehicle.

Behavorial modification, neurotoxicity symptoms, pupil diameter and rectal temperature were recorded according to a standardized observation grid adapted from that described by Irwin. The grid contains the following items: mortality, sedation, excitation, aggressiveness, straub, writhes, convulsions, tremor, exophthalamos, salivation, lacrimation, piloerection, defecation, fear, traction, reactivity to touch, loss of righting reflex, sleep, motor incoordination, muscle tone, stereotypies, catalepsy, grasping, ptosis, difficulty in respiration, corneal reflex, analgesia, gait, rectal temperature, and pupil diameter. Observations were performed 15, 30, 60, 120, and 180 minutes after administration of the test substance and also 24 h later.
±-*myo*-inositol 1,2,6-tris(hydrogen carboxymethylphosphonate) sodium salt was examined at the following doses: 128, 256, and 512 mg/kg administered i.v.

Result: One of three mice died after 2 minutes at the high dose of 512 mg/kg, one of three mice showed straub at the dose of 512 mg/kg. No other reactions were observed which demonstrates a safe compound.

## Claims

1. A chemical compound of formula (I) 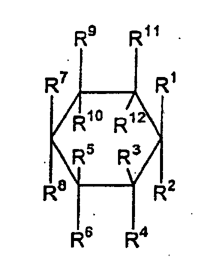 wherein R¹, R³ and R⁶ have the formula: 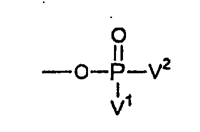 wherein:
V¹ and V² are CH₂OH, COOH, CONH₂, CONOH, CH₂COOH, CH₂CONH₂, CH₂SO₃H, CH₂SO₃NH₂, CH₂NO₂, CF₂COOH, CH₂PO₃H₂, CH₂CH₂COOH, OCH₂COOH, OCH₂CONH₂, OCH₂CH₂COOH, or CH₂CH₂PO₃H₂,
with the provisio that R⁶ may also be hydroxy, alkoxy, acyloxy, N-alkylcarbamoyloxy or N-arylcarbamoyloxy;
R⁷, R¹⁰ and R¹¹ are hydroxy, alkoxy, acyloxy, N-alkylcarbamoyloxy or N-arylcarbamoyloxy;
R², R⁴, R⁵, R⁸, R⁹ and R¹² are hydrogen,
as a neutral or acidic salt thereof, where the counter ions are Na⁺ or K⁺ in any combination.

2. A chemical compound according to claim 1 selected from the group of a charged myo-inositol-1,2,6 derivative of hydroxymethyl phosphonic acid, phosphonoformic acid, phosphonoformamide, phosphonoacetic acid, phosphonoacetamide, phosphonopropanoic acid, sulfonylmethylphosphonic acid, nitromethyl phosphonic acid, carboxydifluromethylphosphonic acid, phosphonomethylphosphonic acid, carboxymethyl phosphonic acid, carbamoylmethyl phosphoric acid, carboxyethyl phosphoric acid and phosphonoethylphosphonic acid.

3. A chemical compound according to claim 1, which is 3,4,5-tri-O-propanoyl-myo-inositol-1,2,6-tris (carboxy methyl hydrogen phosphate) or derivatives thereof.

4. A pharmaceutical composition comprising as a pharmaceutically active ingredient at least one compound according to any one of claims 1 to 3.

## Patentansprüche

1. Chemische Verbindung der Formel (I): 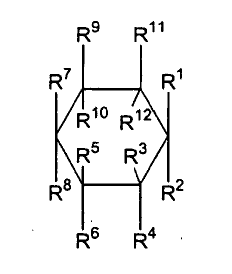 wobei R¹, R³ und R⁶ die Formel haben: 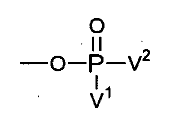 wobei:
V¹ und V² CH₂OH, COOH, CONH₂, CONOH, CH₂COOH, CH₂CONH₂, CH₂SO₃H, CH₂SO₃NH₂, CH₂NO₂, CF₂COOH, CH₂PO₃H₂, CH₂CH₂COOH, OCH₂COOH, OCH₂CONH₂, OCH₂CH₂COOH oder CH₂CH₂PO₃H₂ sind,
unter der Voraussetzung, daß R⁶ sowohl Hydroxy, Alkoxy, Acyloxy, n-Alkylcarbamoyloxy oder N-Arylcarbamoyloxy sein kann;
R⁷, R¹⁰ und R¹¹ Hydroxy, Alkoxy, Acyloxy, N-Alkylcarbamoyloxy oder N-Arylcarbamoyloxy sind;
R², R⁴, R⁵, R⁸, R⁹ oder R¹² Wasserstoff sind;
als ein neutrales oder saures Salz davon, wobei die Gegenionen Na⁺ oder K⁺ in jeglicher Kombination sind.

2. Chemische Verbindung gemäß Anspruch 1, ausgewählt aus der Gruppe eines geladenen Myo-Inositol-1,2,6-derivats der Hydroxymethylphosphonsäure, Phosphonameisensäure, Phosphonformamid, Phosphonessigsäure, Phosphonacetamid, Phosphonpropanonsäure, Sulfonylmethylphosphonsäure, Nitromethylphosphonsäure, Carboxydifluormethylphosphonsäure, Phosphonmethylphosphonsäure, Carboxymethylphosphonsäure, Carbamoylmethylphosphorsäure, Carboxyethylphosphorsäure und Phosphonethylphosphonsäure.

3. Chemische Verbindung gemäß Anspruch 1, welche 3,4,5-Tri-O-propanoyl-myo-inositol-1,2,6-tris(carboxymethylhydrogenphosphat) ist, oder Derivate davon.

4. Pharmazeutische Zusammensetzung umfassend als pharmazeutisch wirksamen Inhaltsstoff mindestens eine Verbindung gemäß einem der Ansprüche 1 bis 3.

## Revendications

1. Composé chimique de formule (I) 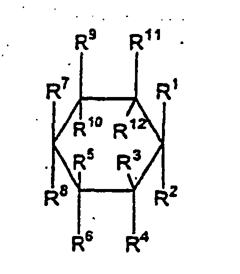 où R¹, R³ et R⁶ ont la formule : 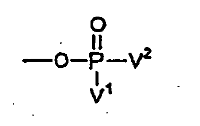 où :
V¹ et V² sont CH₂OH, COOH, CONH₂, CONOH, CH₂COOH, CH₂CONH₂, CH₂SO₃H, CH₂SO₃NH₂, CH₂NO₂, CF₂COOH, CH₂PO₃H₂, CH₂CH₂COOH, OCH₂COOH, OCH₂CONH₂, OCH₂CH₂COOH ou CH₂CH₂PO₃H₂,
avec la condition que R⁶ peut aussi être hydroxyle, alcoxy, acyloxy, N-alkylcarbamcyloxy ou N-arylcarbamoyloxy ;
R⁷, R¹⁰ et R¹¹ sont hydroxyle, alcoxy, acyloxy, N-alkylcarbamoyloxy ou N-arylcarbamoyloxy ;
R², R⁴, R⁵, R⁸, R⁹ et R¹² sont l'hydrogène,
sous forme de sel neutre ou acide, où les contre-ions sont Na⁺ ou K⁺ en toute combinaison.

2. Composé chimique selon la revendication 1 choisi dans le groupe d'un dérivé myo-inositol-1,2,6 chargé de l'acide hydroxyméthylphosphonique, de l'acide phosphonoformique, du phosphonoformamide, de l'acide phosphonoacétique, du phosphonoacétamide, de l'acide phosphonopropanoïque, de l'acide sulfonylméthylphosphonique, de l'acide nitrométhylphosphonique, de l'acide carboxydifluorométhylphosphonique, de l'acide phosphonométhylphosphonique, de l'acide carboxyméthylphosphonique, de l'acide carbamoylméthylphosphorique, de l'acide carboxyéthylphosphorique et de l'acide phosphonoéthylphosphonique.

3. Composé chimique selon la revendication 1 qui est le 3,4,5-tri-O-propanoyl-myo-inositol-1,2,6-tris(carboxyméthylhydrogénophosphate) ou des dérivés de celui-ci.

4. Composition pharmaceutique comprenant comme ingrédient pharmaceutiquement actif au moins un composé selon l'une quelconque des revendications 1 à 3.
